# EUROPÄISCHE PATENTSCHRIFT

(11) **EP 3 685 063 B1**
(45) Veröffentlichungstag und Bekanntmachung des Hinweises auf die Patenterteilung: **16.11.2022**
(21) Anmeldenummer: 18766160.8
(22) Anmeldetag: 31.08.2018
(51) Int. Cl.: F16D 23/06

(54) **SYNCHRONISIERUNGSEINHEIT**
SYNCHRONIZING UNIT
UNITÉ DE SYNCHRONISATION

(30) Priorität: 20.09.2017 DE 102017216690
(43) Veröffentlichungstag der Anmeldung: 29.07.2020
(73) Patentinhaber: Magna PT B.V. & Co. KG, 74199 Untergruppenbach (DE)
(72) Erfinder: EL-MALKI, Mustapha, 74199 Untergruppenbach (DE); PFANNSCHMIDT, Jörn, 74889 Sinsheim (DE); DOOTZ, Burghard, 71067 Sindelfingen (DE)
(74) Vertreter: Völger, Silke Beatrix
(86) Internationale Anmeldenummer: PCT/EP2018/073430
(87) Internationale Veröffentlichungsnummer: WO 2019/057468

(56) Entgegenhaltungen:
- EP-A1- 0 508 639
- EP-A2- 3 159 569
- CN-C- 1 070 589
- DE-A1-102012 209 213
- DE-A1-102014 103 170
- DE-U1-202010 007 666

## Beschreibung

Die vorliegende Erfindung betrifft eine Synchronisierungseinheit für ein Kraftfahrzeuggetriebe, die eine Führungsmuffe mit Außenverzahnung, eine Schiebemuffe mit Innenverzahnung, eine Vorsynchronisationseinheit, mindestens einen Synchronring und ein Gangrad mit Kupplungskörper und Außenverzahnung umfasst.

Synchronisierungseinheiten werden in Schaltgetrieben eingesetzt und gleichen die unterschiedlichen Drehzahlen von dem zu schaltenden Losrad/Gangrad und der Getriebewelle, vor dem Herstellen einer formschlüssigen Verbindung zwischen den beiden Bauteilen, aneinander an. Es sind unterschiedliche Ausführungsformen von Synchronisationseinheiten bekannt, wobei häufig die sogenannte Sperrsynchronisation eingesetzt wird, die zur Synchronisation kegelförmige Reibflächen verwendet. Hierbei können die sogenannte Einkonus-Synchroniation (eine Reibfläche) und Mehrkonus-Synchronisation (zwei oder mehr Reibflächen) unterschieden werden,

Hierbei ist eine Führungsmuffe mit einer Außenverzahnung drehfest auf einer um eine Drehachse drehbaren Welle eines Schaltgetriebes angeordnet. Eine Schiebemuffe mit einer Innenverzahnung ist axial verschiebbar auf der Führungsmuffe angeordnet, wobei die Innenverzahnung der Schiebmuffe mit der Außenverzahnung der Führungsmuffe in Eingriff steht. Zum Einlegen eines Gangs in dem Schaltgetriebe wird die Schiebemuffe über den Schalthebel axial verschoben. In einer axialen Endlage stellt die Schiebmuffe dann eine formschlüssige Verbindung zwischen der Welle und dem Gangrad bzw. dem mit dem Gangrad drehfest verbundenen Kupplungskörper her. Bevor die formschlüssige Verbindung hergestellt werden kann, müssen die Bauteile mit gleicher Drehzahl drehen. Hierfür wird ein Synchronring eingesetzt, wobei zwischen dem Synchronring und dem Kupplungskörper eine Reibpaarung über korrespondierende Konusflächen ausgestaltet ist. Weiterhin ist der Synchronring als Sperrglied ausgeführt, so dass er begrenzt verdrehbar in Bezug auf die Führungsmuffe gelagert ist. Bei einem Gangwechsel und axialer Verlagerung der Schiebemuffe wirkt zunächst eine Vorsynchronisationseinheit auf den Synchronring. Diese übt eine axiale Andruckkraft auf den Synchronring aus, wodurch die Reibpaarung zwischen Synchronring und Kupplungskörper zum Eingriff kommt. Aufgrund der Differenzdrehzahlen zwischen den Bauteilen verdreht sich der Synchronring in eine Sperrposition, in der die Verzahnung der Schiebemuffe nicht durch eine Verzahnung des Synchronrings hindurchgreifen kann. In dieser Position kann die Schiebemuffe nicht weiter axial in ihre Endposition verlagert werden. Erst nach erreichter Synchronisation zwischen den zu kuppelnden Bauteilen dreht sich der Synchronring wieder in die Ausgangsposition zurück, wodurch eine axiale Verlagerung der Schiebemuffe in ihre Endposition möglich ist. In dieser Position greift die Verzahnung der Schiebmuffe durch die Verzahnung des Synchronrings in die Verzahnung des Kupplungskörpers ein.

Übliche Vorsynchronisationseinheiten weisen axial bewegliche Druckstücke auf, die am Umfang der Führungsmuffe in einer Tasche oder einer Ausnehmung angeordnet und federvorbelastet gegen eine in der Innenverzahnung der Schaltmuffe ausgebildete Aussparung gehalten werden. Über entsprechende Rampen der Aussparung werden die Druckstücke bei der Bewegung des Schalthebels und Verlagerung der Schaltmuffe in axialer Richtung mitgenommen, axial gegen den Synchronring gedrückt und leiten so die Vorsynchronisation ein.

Eine derartige Vorsynchronisationseinheit ist aus der DE 10 2012 209 213 A1 bekannt. Bei dieser bekannten Ausführung wird die Vorsynchronisation zur axialen Verschiebung eines Synchronrings durch ein Vorsynchronisationselement eingeleitet. Das Vorsynchronisationselement ist zwischen Schiebemuffe und Führungsmuffe an dessen Außenumfang axial verschiebbar angeordnet. Hierfür ist es in einer Ausnehmung der Führungsmuffe angeordnet und gegen die Schiebemuffe über eine Druckfeder federvorgespannt gehalten. Das Vorsynchronisationselement ist als Formfeder ausgeführt. Durch eine axiale Kopplung der Formfeder und des Synchronrings wird eine koaxiale Halterung des Synchronrings erreicht. Diese soll Schleppverlusten im nicht geschalteten Zustand vermeiden.

Nachteilig an dieser Ausführungsform ist, dass das Vorsynchronistionselement für die axiale Verlagerung des Synchronrings und die Druckfeder als eine Baugruppe ausgeführt und an den Synchronring gekoppelt ausgeführt sind. Wie eingangs bereits erörtert verdreht sich der Synchronring nach der Vorsynchronisation aufgrund der Differenzdrehzahlen zwischen der Schaltmuffe und dem Gangrad in seine Sperrposition. Bei dieser rotatorischen Bewegung muss die Druckfeder die Bewegung mit ausführen und die Federkraft erzeugt eine unerwünschte Reibung zwischen Synchronring und Schiebemuffe.

Aus der DE 20 2010 007 666 U1 ist eine Baugruppe einer Sperrsynchronisationseinheit für ein Schaltgetriebe bekannt, mit wenigstens zwei Synchronsteinen, die mit Sperrsteinen zusammenwirken können, um die Verschiebung einer Schaltmuffe der Sperrsynchronisationseinheit längs einer Getriebeachse zu blockieren: Dabei ist ein Verbindungselement vorgesehen ist, durch welches die wenigstens zwei Synchronsteine fest miteinander verbunden sind.

Aus der DE 10 2014 103 170 A1 ist eine Synchronbaugruppe bekannt mit einer Nabe, mindestens einem Druckstück, das in einer Ausnehmung der Nabe so gelagert ist, dass es Spiel in Umfangsrichtung hat, mindestens einem Synchronring, der mit mehreren Zentrierfortsätzen versehen ist, die jeweils in eine Zentrieraufnahme des Druckstücks so eingreifen, dass sie in Umfangsrichtung im Wesentlichen spielfrei gehalten sind, und einer Schiebemuffe, die verschiebbar auf der Nabe gelagert ist, wobei ein Kippmechanismus vorgesehen ist, der gewährleistet, dass das Druckstück in Umfangsrichtung in eine Endstellung innerhalb der Ausnehmung beaufschlagt wird.

Aus der EP 0508 639 A1 ist eine Synchronisieranordnung mit einer axial zentrierten neutralen Aussparung bekannt. Auf jeder axialen Seite der neutralen Aussparung ist eine Zahnradeinrückaussparung (22, 23) vorgesehen. Die Zahneingriffsvertiefungen sind selektiv durch ein radial nach außen vorgespanntes Arretierelement in Eingriff bringbar, das in einer Strebe montiert ist, um die Tendenz des Arretierelements zu minimieren, zwischen dem Ende des Rings und dem anderen Sperring zu entweichen.

Vor diesem Hintergrund stellt sich die vorliegende Erfindung die Aufgabe, eine Synchronisierungseinheit derart weiterzubilden, dass die oben aufgeführten Nachteile der bekannten Ausführungen vermieden werden.

Diese Aufgabe löst die vorliegende Erfindung durch eine Synchronisierungseinheit mit den in Patentanspruch 1 angegebenen Merkmalen.

Durch die axiale Kopplung des Synchronrings mit dem Synchronringmitnehmer, wobei dieser über das Rastierelement und das Federelement federvorgespannt in einer Rastierausnehmung der Schiebemuffe in der Neutralposition auf einem definierten Abstand gehalten wird, kann ein Kontakt der Reibfläche des Synchronrings mit der Reibfläche des Kupplungskörpers bzw. des Gangrads vermieden werden. Hierdurch kann Reibung vermieden, Verschleiß reduziert und die Gefahr von Synchronringgeräuschen kann minimiert werden. Durch eine Entkopplung des Rastierelements mit Federelement bei einer rotatorischen Bewegung des Synchronrings beim Schaltvorgang in die Verdrehung der Sperrposition und auch vice versa, kann der Synchronring reibungsfrei in die Sperrposition umschlagen.

Ein weiterer Vorteil der erfindungsgemäßen Ausführung besteht darin, dass die fest mit dem Synchronring verbundenen Synchronringmitnehmer, die vorzugsweise als Laschen ausgeführt sind, fliehkraftbedingt nicht abheben oder verkippen können.

In einer Weiterbildung des Erfindungsgedankens ist vorgesehen, dass beidseits der Führungsmuffe jeweils ein Synchronring angeordnet ist und den Synchronringen über den Umfang der Führungsmuffe verteilt wechselseitig Synchronringmitnahmeelemente zugeordnet sind. Durch diese wechselseitige Anordnung der Synchronringmitnahmeelemente lässt sich eine Mittenarretierungsfunktion der Schiebemuffe relativ zur Führungsmuffe erreichen.

Die axiale Richtung ist nachfolgend die in Richtung der Drehachse der Getriebewelle, auf der die Synchronisierungseinheit angeordnet ist, verlaufende Richtung.

Vorteilhafte Ausgestaltungen der vorliegenden Erfindung sind in den Unteransprüchen angegeben.

Die Erfindung wird nachfolgend anhand in den Zeichnungen schematisch dargestellter Ausführungsbeispiele beschrieben.

Es zeigt:
- Fig. 1: einen Längsschnitt durch eine Synchronisierungseinheit gemäß einer ersten Ausführungsform der Erfindung,
- Fig. 2: einen Querschnitt gemäß der Linie A-A in Figur 1,
- Fig.3: einen Querschnitt gemäß Figur 2 einer weiteren Ausführungsform der Erfindung,

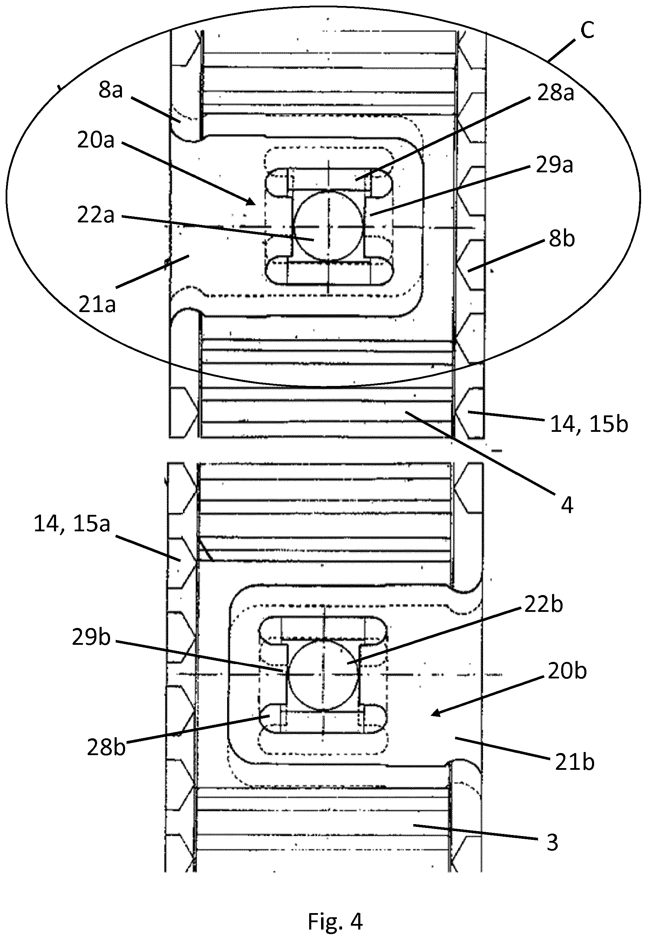

- Fig. 4: einen Ausschnitt aus einer Abwicklung der durch die Linie B-B definierten Zylinderfläche in einer vergrößerten Darstellung,

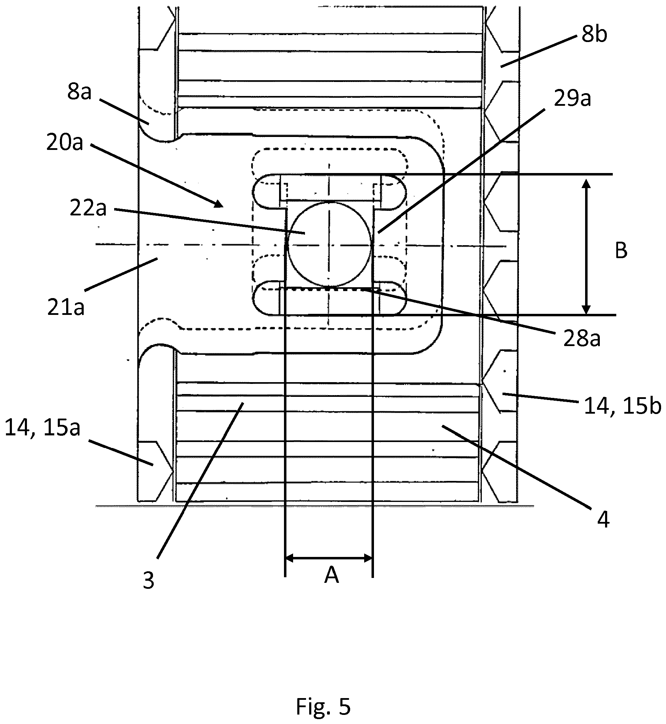

- Fig. 5: ein vergrößerter Ausschnitt eines Details C gemäß Figur 4,
- Fig. 6a: einen Längsschnitt durch eine alternative Ausführungsform eines Synchronringmitnehmers,
- Fig. 6b: eine Draufsicht auf den Synchronringmitnehmer gemäß Figur 6a,
- Fig. 7a: einen Schnitt durch eine alternative Ausführungsform eines Rastelements mit Druckfeder,
- Fig. 7b: eine Draufsicht auf das Rastelement; und
- Fig. 8: einen Schnitt durch eine weitere Ausführungsform eines Rastierelements mit Druckfeder.

Die nachfolgend näher beschriebene Synchronisierungseinheit wird üblicherweise in einem Antriebsstrang für ein Kraftfahrzeug eingesetzt, wobei der Antriebsstrang eine Getriebeanordnung umfasst. Die Getriebeanordnung weist in der Regel eine Eingangswelle und eine Ausgangswelle auf, die über einen schaltbaren Radsatz mit einander verbunden sind. Der Radsatz weist dabei eine Anzahl Gangstufen auf, die jeweils aus einem Radsatz mit einem Festrad und einem Losrad bestehen. Die Synchronisierungseinheit ist hierbei auf einer Getriebewelle angeordnet und dient dazu, das Losrad mit der Getriebewelle zu verbinden oder vice versa zu entkoppeln.

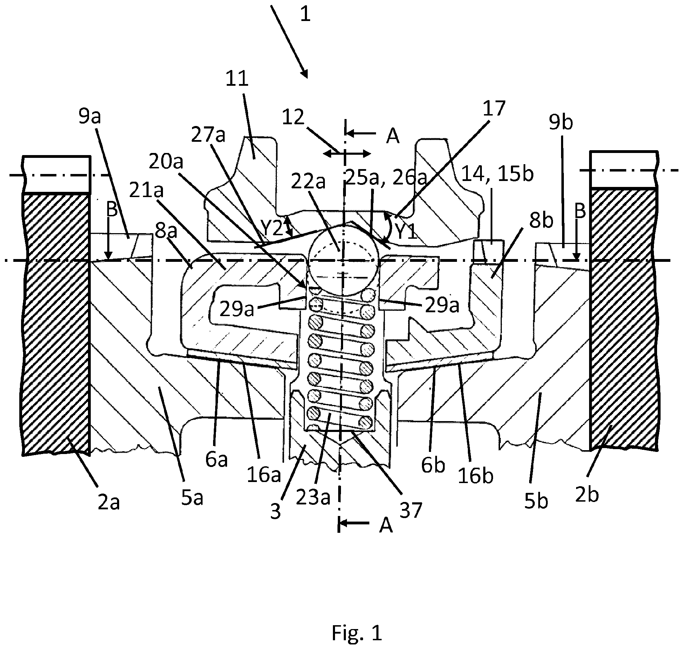

Gemäß der Darstellung der Figur 1 ist eine Synchronisierungseinheit 1 gezeigt, die zur Kopplung bzw. Entkopplung von zwei axial benachbart auf einer Getriebewelle angeordneten Losrädern 2a, 2b ausgeführt ist. Die Getriebewelle ist zeichnerisch nicht dargestellt.

Auf der Getriebewelle ist eine Führungsmuffe 3 mit einer Außenverzahnung 4 drehfest und axial unverschiebbar angeordnet. Beidseits der Führungsmuffe 3 sind auf der Getriebewelle die Losräder 2a, 2b frei drehbar gelagert. Auf ihrer der Führungsmuffe 3 zugewandten Seite weisen die Losräder 2a, 2b ringförmige Kupplungskörper 5a, 5b auf, die mit den Losrädern 2a, 2b drehfest verbunden oder einstückig ausgeführt sind. Die Kupplungskörper 5a, 5b weisen jeweils eine Kegelfläche 6a, 6b auf, die jeweils einen Gegenkonus für eine korrespondierende Fläche 16a, 16b an einem Synchronring 8a, 8b bildet. Die Kupplungskörper 5a, 5b weisen weiterhin eine Außenverzahnung 9a, 9b auf, die der Außenverzahnung 4 an der Führungsmuffe 3 entspricht. In die Verzahnung der Führungsmuffe 3 greift eine Innenverzahnung 10 einer Schiebemuffe 11 ein. Die Schiebmuffe 11 ist in ihrer Neutralstellung - gezeigt in der Figur 1- zentrisch in Bezug auf die Führungsmuffe 3 angeordnet. Wie es der Pfeil 12 in Figur 1 darstellt, ist die Schiebmuffe 11 in axialer Richtung nach rechts bzw. nach links verschiebbar und ist in der axialen Endstellung rechts bzw. links in einer Schaltposition.

Die Synchronisierungseinheit 1 umfasst weiterhin Synchronringe 8a, 8b, die an ihrem Außenumfang 14 eine Synchronringverzahnung 15a, 15b aufweisen, die als Sperrverzahnung ausgeführt ist. Die Synchronringe 8a, 8b sind in radialer Richtung jeweils zwischen dem Innenumfang der Schiebemuffe 11 und der Kegelfläche 6a bzw. 6b des zugeordneten Kupplungskörpers 5a, 5b derart angeordnet, dass sie mit einer zur Kegelfläche 6a bzw. 6b weisenden Kegelfläche 16a bzw. 16b eine Reibfläche bilden können. Die Synchronringe 8a, 8b sind begrenzt verdrehbar in Bezug auf die Führungsmuffe 3 gelagert, wobei in einer ersten relativen Position die Innenverzahnung 10 der Schiebemuffe 11 durch die Synchronringverzahnung 15a bzw. 15b in axialer Richtung hindurchgeschoben werden kann, um mit der Außenverzahnung 9a bzw. 9b des Kupplungskörpers einen Formschluß zu bilden. In einer weiteren relativen Position, die als Sperrposition bezeichnet wird, wird ein derartiges Durchschalten der Schiebemuffe 11 verhindert.

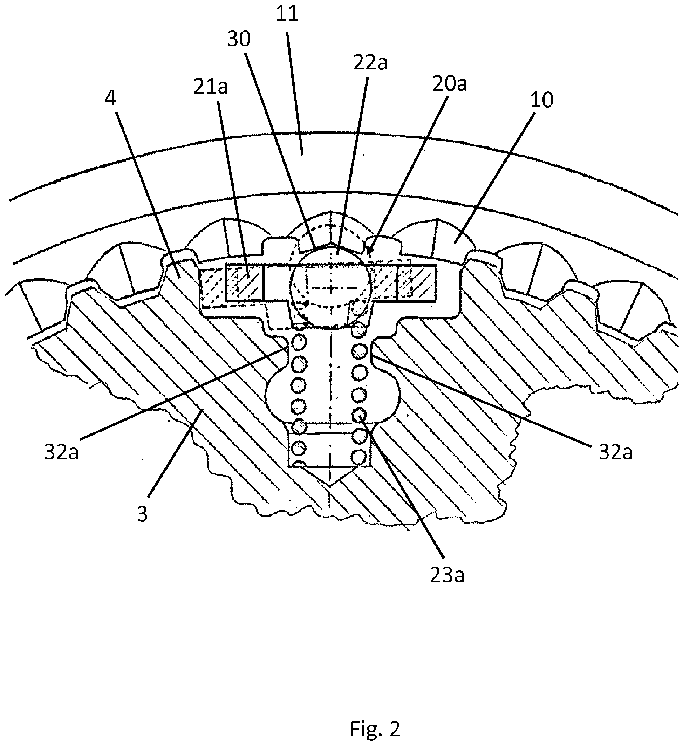

Die Synchronisationseinheit 1 umfasst des Weiteren eine Anzahl Vorsynchronisationseinheiten 20a bzw. 20b. Die Vorsynchronisationseinheit 20a bzw. 20b weist ein Synchronringmitnahmeelement 21a, 21b, einen Rastkörper 22a, 22b und ein Federelement 23a, 23b auf. Die Vorsynchronisationseinheiten 20a, 20b sind in entsprechenden radialen Bohrungen bzw. Ausnehmungen 24a, 24b am Außenumfang der Führungsmuffe 3 aufgenommen. Bei dem gezeigten Ausführungsbeispiel sind sechs um jeweils 60 Grad versetzte Ausnehmungen vorgesehen, in die die Vorsynchronisationseinheiten 20a, 20b alternierend eingesetzt sind. In den Innenumfang der Schiebemuffe 11 sind Ausnehmungen 25a, 25b eingebracht, in die die Rastkörper 22a, 22b eingreifen. In dem in den Figuren 1 und 2 dargestellten Ausführungsbeispiel sind die Rastkörper 22a, 22b als Kugeln ausgeführt. Die Kugeln werden über die Federelemente 23a bzw. 23b, welches als Druckfeder ausgeführt ist, federvorbelastet gegen die Ausnehmung 25a bzw. 25b gedrückt. Hierbei ist die Druckfeder in einer Bohrung 37 in der Führungsmuffe 3 zentriert gehalten. Die Ausnehmung 25a, 25b ist als v-förmige Nut ausgeführt. Die Nut umfasst dabei zwei Flanken, wobei die erste Flanke 26 a, b einen Winkel Y1 und die zweite Flanke 27 a, b einen Winkel Y2 in Bezug zu einer Geraden, die parallel zur Drehachse der Getriebewelle verläuft, hat. Die Flanke 26a bzw. 26b bildet dabei die Rastierrampe für die Vorsynchronisation. Die Flanke 27a bzw. 27b bildet die Rastierrampe für die Mittenarretierung.

Die federvorbelasteten Rastkörper 22a, 22b sind in Synchronringmitnahmeelementen 21a bzw. 21b gehalten. Hierfür sind die Synchronringmitnahmeelemente 21a bzw. 21b als axial sich erstreckende rechteckige Laschen ausgeführt. In die Lasche ist eine fensterartige Ausnehmung 28a bzw. 28b zur axialen Führung und Abstützung des Rastkörpers 22a, 22b eingebracht. Die in der axialen Richtung liegenden Randbereiche der Ausnehmung sind als nach unten gebördelte Kanten 29a, 29b ausgeführt. Eine fensterartige Ausnehmung ohne Bördelung ist auch möglich. Die lichte Weite A der Ausnehmung entspricht dabei dem Durchmesser der Kugel, so dass diese in Axialrichtung abgestützt gehalten ist. Des Weiteren bilden die Randbereiche eine Führung für die Druckfeder in axialer Richtung. Die lichte Weite B in einer quer zur Axialrichtung verlaufenden Richtung ist größer als der Durchmesser der Kugel bemessen, so dass die Kugel bei einer rotatorischen Bewegung des Synchronrings 8a bzw. 8b in Bezug auf die Führungsmuffe 3 längs der Ausnehmung in der Querrichtung gleitend geführt ist. Wie bereits obenstehend erläutert, wird die Druckfeder zwischen den gebördelten Kanten 29a bzw. 29b des Synchronringmitnahmeelements 21a bzw. 21b in axialer Richtung geführt. Die Synchronringe 8a bzw. 8b weisen im Bereich der Kegelflächen 16a bzw. 16b eine geringere Breite in axialer Richtung auf, als im Bereich der Synchronringmitnahmeelemente 21a, 21b, sodass es bei axialer Verschiebung der Führungsmuffe (11) und Mitnahme der Kugel bzw. Verbiegung der Druckfeder zu keiner Kollision mit dem Synchronring 8a bzw. 8b kommt.

Das Synchronringmitnahmeelement 21a bzw. 21b ist an dem jeweilig zugeordneten Synchronring 8a bzw. 8b an dessen Randbereich fest angebunden. Vorteilhafterweise ist das Synchronringmitnahmeelement 21a bzw. 21b einteilig mit dem Synchronring 8a bzw. 8b ausgeführt. In der Neutralposition der Schiebemuffe 11 werden die Synchronringe 8a und 8b über die Kugel und das Synchronringmitnahmeelement 21a bzw. 21b axial definiert auf Abstand an der Schiebemuffe 11 gehalten.

Figur 1 zeigt den Rastkörper in einer gestrichelten Darstellung eingefedert, in der Position, in der die Schiebemuffe in einer axialen Endposition ist.

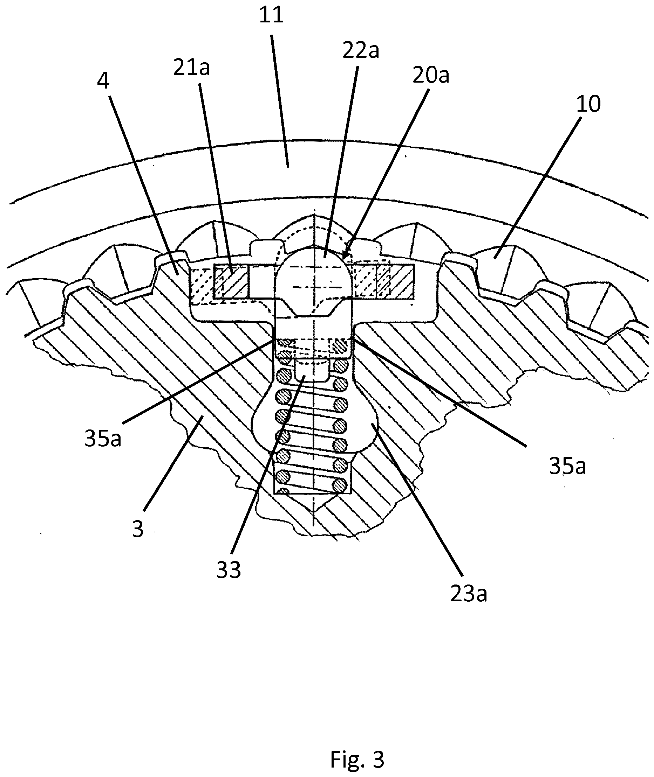

Das Einlegen eines Ganges erfolgt durch Betätigen eines nicht dargestellten Schalthebels, der in eine ringförmige Nut 17 am Außenumfang der Schiebemuffe 11 eingreift und ein axiales Verschieben der Schiebemuffe 11 in Richtung auf das zu kuppelnde Gangrad 2a bzw. 2b bewirkt. Die Flanke 27a ist dabei derart ausgelegt, dass die Kugel längs der Rampenkontur mitbewegt wird. Durch die axiale Abstützung der Kugel in Ausnehmung des Synchronringmitnahmeelements 21a bzw. 21b wird der Synchronring 8a bzw. 8b ebenfalls axial mitgenommen. Dadurch kommen die Kegelflächen 6a/16a bzw. 6b/16b in eine reibschlüssige Verbindung. Diese Position ist in den Figuren 2 und 3 gezeigt.

Wie obenstehend erläutert, ist das Synchronringmitnahmeelement 21a, 21b zum Rastkörper / Kugel 22a bzw. 22b in tangentialer Richtung entkoppelt ausgeführt. Das bedeutet, dass bei einem Umschlagen des Synchronrings 8a bzw. 8b in die Indexposition/Sperrposition die Kugeln in ihrer Winkelposition in Bezug auf die Führungsmuffe verbleiben, da sie längs der Kanten 29a bzw. 29b in der Ausnehmung verschieblich gelagert sind. Dies ist in der gestrichelten Position des Synchronmitnahmeelements 21a und des Rastkörpers 22a in der Darstellung der Figuren 2 und 3 gezeigt.

Aus dem Querschnitt der Figur 2 ist weiterhin zu erkennen, dass die Zahnhöhen der Verzahnung 10 im Bereich der Vorsynchronisationseinheiten 20a bzw. 20b gekürzt sind. Des Weiteren ist in dem mittig in Bezug auf die Vorsynchronisationseinheit angeordneten Zahn eine axial verlaufende Längsrille 30 angeordnet. Diese Längsrille 30 ist zur Führung und Positionierung des Rastkörpers bei einer Bewegung des Synchronringmitnehmers 21a, 21b in tangentialer Richtung ausgeführt. Gleichzeitig dient die Längsrille 30 zur Führung des Rastkörpers bei Bewegung der Schiebemuffe 11 in axialer Schieberichtung.

Die Ausnehmungen 24a bzw. 24b weisen einen Führungsabschnitt 32a bzw. 32b für die Federelemente in tangentialer Richtung auf. Des Weiteren weist die Ausnehmung 24a, 24b einen Absatz auf, der eine Ecke 31a bzw. 31b ausbildet. Diese Ecke dient zum Abblocken des Rastkörpers 22a, 22b, falls dieser aus der Führung in Bezug auf das Federelement springt. Der Rastkörper 22a, 22b ist im Innendurchmesser des Federelements mit der unteren Kugelkalotte geführt und zentriert gehalten.

Die Figur 3 zeigt im Unterschied zu der Figur 2 eine Vorsynchronisationseinheit 20a bei der der Rastkörper 22a als Rastpilz ausgeführt ist. Hierbei weist der Rastpilz einen halbkugelig ausgeführten Kopf und einen zylindrischen Grundkörper auf. Der Grundkörper ist mit einem Zapfen zur Zentrierung des Federelementes ausgebildet. Wie es aus der Schnittdarstellung zu erkennen ist, liegt der Grundkörper in entsprechenden Führungsabschnitten 35a bzw. 35b der Führungsmuffe in tangentialer Richtung an. In axialer Richtung ist eine Bewegung des Rastkörpers möglich.

Am Ende des Synchronisationsvorgangs d.h. bei Erreichen der gleichen Drehzahl zwischen der Getriebewelle und dem Gangrad 2a bzw. 2b lässt sich der Synchronring 8a bzw. 8b aus seiner Sperrposition verdrehen. Bei dieser rotatorischen Bewegung findet eine Relativbewegung zwischen Rastkörper 22a bzw. 22b und Synchronringmitnahmeelement 21a bzw. 21b längs der Kanten 29a bzw. 29b der Ausnehmung 28a bzw. 28b statt. Durch eine Verdrehung der Sperrverzahnung ist der Weg frei für die Schiebemuffe 11 und diese greift in ihrer axialen Endposition über die Innenverzahnung 10 in die Außenverzahnung des Kupplungskörpers des Gangrads 2a bzw. 2b formschlüssig ein.

Es ist selbstverständlich im Zuge der Erfindung auch eine Ausführungsform möglich, bei der nur auf einer Seite der Führungsmuffe ein Synchronring und ein koppelbares Gangrang angeordnet ist.

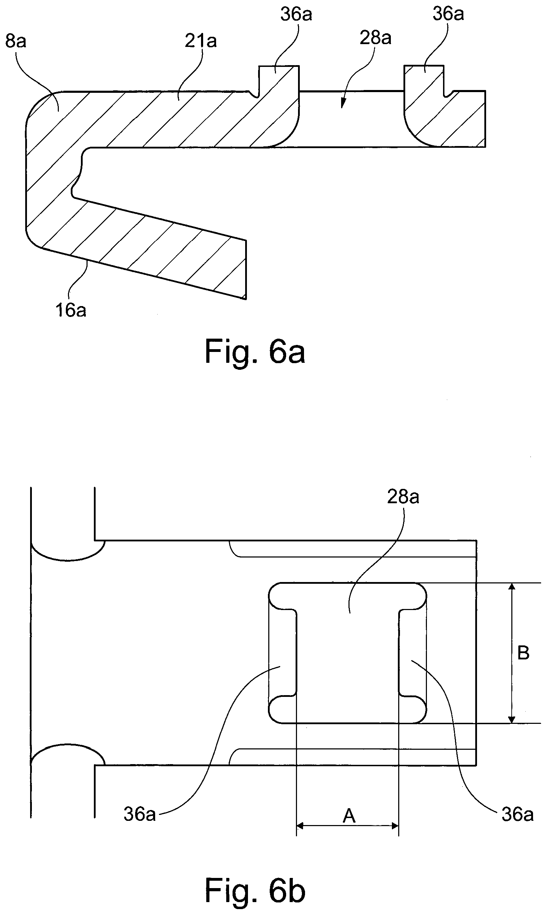

Die Figuren 6a und 6b zeigen eine weitere Ausführungsform eines Synchronringmitnahmeelements 21a welcher als vom Synchronring 8a axial sich erstreckende rechteckige Lasche ausgeführt ist. In die Lasche ist eine fensterartige Ausnehmung 28a zur Führung und Abstützung des Rastkörpers eingebracht. Die in der axialen Richtung liegenden Randbereiche 36a der Ausnehmung sind als nach oben gebördelte Kanten ausgeführt. In einer alternativen Ausgestaltung des Synchronringmitnahmeelements kann die fensterartige Ausnehmung auch ohne Bördelung ausgeführt sein.

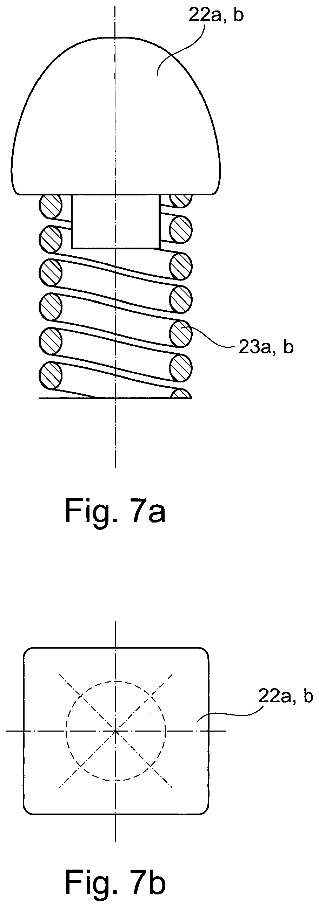

Figuren 7a und 7b zeigen eine alternative Ausführungsform eines Rastkörpers 22a, 22b mit Druckfeder. Hierbei weist der Rastkörper einen quadratischen Grundkörper mit halbkugelförmig ausgestalteten Kopf auf. Auf der Unterseite des Rastkörpers ist ein zylindrischer Zapfen 33 zur Zentrierung der Druckfeder 23a, 23b angeformt. Die Druckfeder wird dabei bei der Montage über den Zapfen 33 geschoben und liegt an der Unterseite des Rastkörpers an.

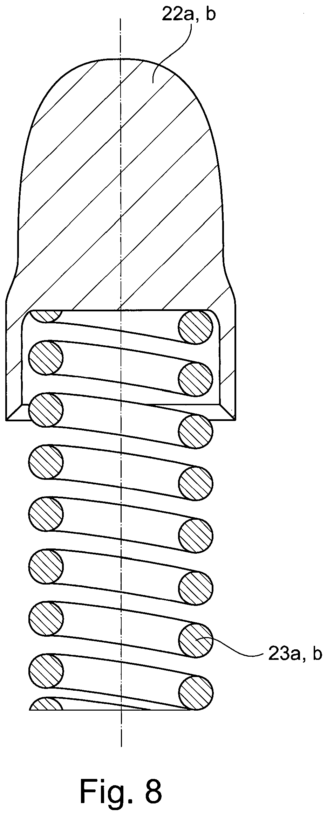

Die in der Figur 8 gezeigte Ausführungsform des Rastkörpers weist einen Grundkörper auf, der einen halbkugellförmigen Kopf und einen zylindrischen Endbereich aufweist. In den Endbereich ist eine Bohrung 34 eingebracht, die zur Abstützung und Aufnahme eines Endbereichs der Druckfeder 23a, 23b dient.

## Patentansprüche

1. Synchronisierungseinheit (1) für ein Kraftfahrzeuggetriebe mit
- einer Führungsmuffe (3), die an einer Getriebewelle drehfest festlegbar ist und eine Außenverzahnung (4) aufweist,
- einer Schiebemuffe (11), die eine Innenverzahnung (10) aufweist und die über die Innenverzahnung (10) in die Außenverzahnung (4) der Führungsmuffe (3) eingreift und in Bezug auf die Führungsmuffe (3) axial verschieblich gelagert ist
- mindestens einen Synchronring (8a, 8b), der in Bezug auf die Führungsmuffe (3) axial verschieblich und begrenzt verdrehbar gelagert ist,
- einer Anzahl Vorsynchronisationseinheiten (20a, 20b), die zwischen der Schiebemuffe (11) und dem Synchronring (8a, 8b) derart wirken, dass der Synchronring (8a, 8b) bei einer axialen Verschiebung der Schiebemuffe (10) axial verschiebbar ist, wobei die Vorsynchronisationseinheit (20a, 20b) ein Federelement (23a, 23b), einen Rastkörper (22a, 22b) und ein Synchronringmitnahmeelement (21a, 21b) umfasst, und wobei das Synchronringmitnahmeelement (21a, 21b) in axialer Richtung fest an dem Synchronring (8a, 8b) angebunden ist, und wobei der Rastkörper (22a, 22b) federvorbelastet an einer Ausnehmung (25a, 25b) der Schiebemuffe (11) abgestützt und an dem Synchronringmitnahmeelement (21a, 21b) zur Übertragung der axialen Verschiebebewegung gehalten ist, wobei
- das Synchronringmitnahmeelement (21a, 21b) weiterhin derart ausgeführt ist, dass bei einer rotatorischen Bewegung zwischen Führungsmuffe (3) und Synchronring (8a, 8b) eine Relativbewegung zwischen Rastkörper (22a, 22b) und Synchronringmitnahmeelement (21a, 21b) möglich ist, wobei
- der Rastkörper (22a, 22b) eine Kugel, eine Halbkugel mit quadratischem Grundkörper oder eine Halbkugel mit zylindrischem Grundkörper ist und das Synchronringmitnahmeelement (21a, 21b) einstückig mit dem Synchronring (8a, 8b) ausgeführt ist, **dadurch gekennzeichnet,**
- **dass** das Synchronringmitnahmeelement (21a, 21b) als axial sich erstreckende Lasche, in die eine fensterartiger Ausnehmung (28a, 28b) zur Führung und Abstützung des Rastkörpers (22a, 22b) eingebracht ist, ausgeführt ist, und dass die Ausnehmung (28a, 28b) in axialer Richtung eine lichte Weite A aufweist, die zur Abstützung und Halterung dem Durchmesser des Rastkörpers (22a, 22b) angepasst ist, so dass dieser in beidseitiger axialer Richtung abgestützt gehalten ist, und dass die in Querrichtung verlaufende lichte Weite B größer als der Durchmesser des Rastkörpers ist, so dass der Rastkörper (22a, 22b) bei einer rotatorischen Bewegung des Synchronrings (8a, 8b in) Bezug auf die Führungsmuffe (3) längs der Ausnehmung in der Querrichtung gleitend geführt ist und eine entkoppelte Relativbewegung zwischen Rastkörper (22a, 22b) und Synchronringmitnahmeelement (21a, 21b) ermöglicht.

2. Synchronisierungseinheit (1) nach Anspruch 1, **dadurch gekennzeichnet, dass** die in der axialen Richtung liegenden Randbereiche der Ausnehmung als nach unten oder nach oben gebördelte Kanten (29a, 29b; 36a, 36b) ausgeführt sind.

3. Synchronisierungseinheit (1) nach einem der vorangehenden Ansprüche, **dadurch gekennzeichnet, dass** die Zahnhöhen eines oder mehrerer Zähne der Verzahnung (10) im Bereich der Vorsynchronisationseinheiten (20a, 20b) gekürzt sind.

4. Synchronisierungseinheit (1) nach einem der vorangehenden Ansprüche, **dadurch gekennzeichnet, dass** in dem mittig in Bezug auf die Vorsynchronisationseinheit (20a, 20b) angeordneten Zahn der Verzahnung (10) eine axial verlaufende Längsrille (30) zur Führung des Rastkörpers (22a, 22b) ausgeführt ist.

5. Synchronisierungseinheit (1) nach einem der vorangehenden Ansprüche, **dadurch gekennzeichnet, dass** die Vorsynchronisationseinheit (21a, 21b) in einer entsprechenden radialen Bohrung bzw. Ausnehmung (24a, 24b) am Außenumfang der Führungsmuffe (3) aufgenommen ist.

6. Synchronisierungseinheit (1) nach Anspruch 5, **dadurch gekennzeichnet, dass** die Ausnehmung (24a, 24b) einen Führungsabschnitt (32a, 32b) für die Federelemente (23a, 23b) in tangentialer Richtung aufweisen.

7. Synchronisierungseinheit (1) nach Anspruch 5 oder 6, **dadurch gekennzeichnet, dass** die Ausnehmung (24a, 24b) einen Führungsabschnitt (35a, 35b) zur Abstützung des Rastkörpers in tangentialer Richtung aufweist, wobei der Führungsabschnitt eine Bewegung des Rastkörpers in axialer Richtung zulässt.

8. Synchronisierungseinheit (1) nach einem der vorangehenden Ansprüche, **dadurch gekennzeichnet, dass** die Ausnehmung (25a, 25b) zur Abstützung des Rastkörpers (22a, 22b) als v-förmige Nut ausgeführt ist, die erste und zweite Flanken (26a, 26b;27a, 27b) aufweist, wobei die erste Flanke (26 a, b) einen Winkel Y1 und die zweite Flanke (27 a, b) einen Winkel Y2 in Bezug zu einer Geraden, die parallel zur Drehachse der Getriebewelle verläuft, hat.

## Claims

1. Synchronizing unit (1) for a motor vehicle transmission, comprising
- a guide sleeve (3) which can be fixed co-rotationally to a transmission shaft and has external toothing (4),
- a sliding sleeve (11) which has internal toothing (10) and which, via the internal toothing (10), engages in the external toothing (4) of the guide sleeve (3) and is mounted such that it can be displaced axially in relation to the guide sleeve (3),
- at least one synchronizing ring (8a, 8b), which is mounted such that it can be displaced axially in relation to the guide sleeve (3) and rotated to a limited extent,
- a number of pre-synchronization units (20a, 20b), which act between the sliding sleeve (11) and the synchronizing ring (8a, 8b) in such a way that the synchronizing ring (8a, 8b) can be displaced axially during an axial displacement of the sliding sleeve (10), wherein the pre-synchronization unit (20a, 20b) has a spring element (23a, 23b), a detent element (22a, 22b) and a synchronizing ring driver element (21a, 21b), and wherein the synchronizing ring driver element (21a, 21b) is attached to the synchronizing ring (8a, 8b) so as to be fixed in the axial direction, and wherein the detent element (22a, 22b) is supported under spring load on a recess (25a, 25b) of the sliding sleeve (11) and is held on the synchronizing ring driver element (21a, 21b) in order to transmit the axial displacement movement, wherein
- the synchronizing ring driver element (21a, 21b) is also designed in such a way that in the event of a rotational movement between the guide sleeve (3) and synchronizing ring (8a, 8b), a relative movement between the detent element (22a, 22b) and the synchronizing ring driver element (21a, 21b) is possible, wherein
- the detent element (22a, 22b) is a ball, a hemisphere with a square main body or a hemisphere with a cylindrical main body, and the synchronizing ring driver element (21a, 21b) is formed in one piece with the synchronizing ring (8a, 8b), **characterized**
- **in that** the synchronizing ring driver element (21a, 21b) is designed as a lug extending axially, into which a window-like recess (28a, 28b) for guiding and supporting the detent element (22a, 22b) is introduced, and in that the recess (28a, 28b) has a clear width A in the axial direction which is adapted to support and hold the diameter of the detent element (22a, 22b), such that the latter is held in supported fashion on both sides in the axial direction, and that the clear width B extending in the transverse direction is greater than the diameter of the detent element, so that, during a rotational movement of the synchronizing ring (8a, 8b) in relation to the guide sleeve (3), the detent element (22a, 22b) is guided so as to slide along the recess in the transverse direction and permits a decoupled relative movement between the detent element (22a, 22b) and the synchronizing ring driver element (21a, 21b).

2. Synchronizing unit (1) according to Claim 1, **characterized in that** the edge regions of the recess, located in the axial direction, are designed as edges (29a, 29b; 36a, 36b) flanged upwards or downwards.

3. Synchronizing unit (1) according to one of the preceding claims, **characterized in that** the teeth heights of one or more teeth of the toothing (10) are shortened in the area of the pre-synchronization units (20a, 20b).

4. Synchronizing unit (1) according to one of the preceding claims, **characterized in that** an axially extending longitudinal groove (30) for guiding the detent element (22a, 22b) is formed in the tooth of the toothing (10) arranged centrally in relation to the pre-synchronization unit (20a, 20b).

5. Synchronizing unit (1) according to one of the preceding claims, **characterized in that** the pre-synchronizing unit (21a, 21b) is accommodated in a corresponding radial hole or recess (24a, 24b) on the outer circumference of the guide sleeve (3).

6. Synchronizing unit (1) according to Claim 5, **characterized in that** the recess (24a, 24b) has a guide section (32a, 32b) for the spring elements (23a, 23b) in the tangential direction.

7. Synchronizing unit (1) according to Claim 5 or 6, **characterized in that** the recess (24a, 24b) has a guide section (35a, 35b) for supporting the detent element in the tangential direction, the guide section permitting a movement of the detent element in the axial direction.

8. Synchronizing unit (1) according to one of the preceding claims, **characterized in that** the recess (25a, 25b) for supporting the detent element (22a, 22b) is formed as a V-shaped groove which has first and second flanks (26a, 26b; 27a, 27b), wherein the first flank (26 a, b) has an angle Y1 and the second flank (27 a, b) has an angle Y2 in relation to a straight line which extends parallel to the axis of rotation of the transmission shaft.

## Revendications

1. Unité de synchronisation (1) pour une transmission de véhicule automobile comportant
- un manchon de guidage (3) qui peut être fixé de manière solidaire en rotation à un arbre de transmission et présente une denture extérieure (4),
- un manchon coulissant (11) qui présente une denture intérieure (10) et qui s'engrène, par le biais de la denture intérieure (10), dans la denture extérieure (4) du manchon de guidage (3) et est monté de manière axialement déplaçable par rapport au manchon de guidage (3),
- au moins une bague de synchronisation (8a, 8b) qui est montée de manière axialement déplaçable et rotative de façon limitée par rapport au manchon de guidage (3),
- un certain nombre d'unités de pré-synchronisation (20a, 20b) qui agissent entre le manchon coulissant (11) et la bague de synchronisation (8a, 8b) de telle sorte que la bague de synchronisation (8a, 8b) soit axialement déplaçable lors d'un déplacement axial du manchon coulissant (10), l'unité de pré-synchronisation (20a, 20b) comprenant un élément ressort (23a, 23b), un corps d'encliquetage (22a, 22b) et un élément d'entraînement de bague de synchronisation (21a, 21b), et l'élément d'entraînement de bague de synchronisation (21a, 21b) étant connecté fixement à la bague de synchronisation (8a, 8b) dans la direction axiale, et le corps d'encliquetage (22a, 22b) étant supporté sur un évidement (25a, 25b) du manchon coulissant (11) de manière précontrainte par ressort et étant retenu sur l'élément d'entraînement de bague de synchronisation (21a, 21b) pour la transmission du mouvement de déplacement axial,
- l'élément d'entraînement de bague de synchronisation (21a, 21b) étant en outre réalisé de telle sorte que, lors d'un mouvement rotatif entre le manchon de guidage (3) et la bague de synchronisation (8a, 8b), un mouvement relatif entre le corps d'encliquetage (22a, 22b) et l'élément d'entraînement de bague de synchronisation (21a, 21b) est possible,
- le corps d'encliquetage (22a, 22b) étant une sphère, une demi-sphère à corps de base carré ou une demi-sphère à corps de base cylindrique et l'élément d'entraînement de bague de synchronisation (21a, 21b) étant réalisé d'une seule pièce avec la bague de synchronisation (8a, 8b), **caractérisée**
- **en ce que** l'élément d'entraînement de bague de synchronisation (21a, 21b) est réalisé sous forme de languette s'étendant axialement, dans laquelle est ménagé un évidement (28a, 28b) de type fenêtre pour le guidage et le support du corps d'encliquetage (22a, 22b), et en ce que l'évidement (28a, 28b) présente dans la direction axiale une largeur intérieure A qui est adaptée au diamètre du corps d'encliquetage (22a, 22b) pour le support et la retenue, de sorte que celui-ci soit retenu de manière supportée dans la direction axiale bilatérale, et en ce que la largeur intérieure B s'étendant dans la direction transversale est supérieure au diamètre du corps d'encliquetage, de sorte que le corps d'encliquetage (22a, 22b), lors d'un mouvement rotatif de la bague de synchronisation (8a, 8b) par rapport au manchon de guidage (3), soit guidé de manière glissante le long de l'évidement dans la direction transversale et permette un mouvement relatif découplé entre le corps d'encliquetage (22a, 22b) et l'élément d'entraînement de bague de synchronisation (21a, 21b).

2. Unité de synchronisation (1) selon la revendication 1, **caractérisée en ce que** les régions de bord, situées dans la direction axiale, de l'évidement sont réalisées sous forme de bords (29a, 29b ; 36a, 36b) repliés vers le bas ou vers le haut.

3. Unité de synchronisation (1) selon l'une des revendications précédentes, **caractérisée en ce que** les hauteurs d'une ou de plusieurs dents de la denture (10) dans la région des unités de pré-synchronisation (20a, 20b) sont raccourcies.

4. Unité de synchronisation (1) selon l'une des revendications précédentes, **caractérisée en ce qu'**une rainure longitudinale (30) s'étendant axialement pour le guidage du corps d'encliquetage (22a, 22b) est réalisée dans la dent, disposée centralement par rapport à l'unité de pré-synchronisation (20a, 20b), de la denture (10).

5. Unité de synchronisation (1) selon l'une des revendications précédentes, **caractérisée en ce que** l'unité de pré-synchronisation (21a, 21b) est reçue dans un alésage ou évidement (24a, 24b) radial correspondant sur la périphérie extérieure du manchon de guidage (3).

6. Unité de synchronisation (1) selon la revendication 5, **caractérisée en ce que** l'évidement (24a, 24b) présente une partie de guidage (32a, 32b) pour les éléments ressorts (23a, 23b) dans la direction tangentielle.

7. Unité de synchronisation (1) selon la revendication 5 ou 6, **caractérisée en ce que** l'évidement (24a, 24b) présente une partie de guidage (35a, 35b) pour le support du corps d'encliquetage dans la direction tangentielle, la partie de guidage autorisant un mouvement du corps d'encliquetage dans la direction axiale.

8. Unité de synchronisation (1) selon l'une des revendications précédentes, **caractérisée en ce que** l'évidement (25a, 25b) est, pour le support du corps d'encliquetage (22a, 22b), réalisé sous forme de rainure en forme de V qui présente des premier et deuxième flancs (26a, 26b ; 27a, 27b), le premier flanc (26 a, b) présentant un angle Y1 et le deuxième flanc (27 a, b) présentant un angle Y2 par rapport à une ligne droite qui s'étend parallèlement à l'axe de rotation de l'arbre de transmission.
